(19) Europäisches Patentamt
European Patent Office
Office européen des brevets

(11) Publication number: **0 176 642**
**B1**

(12) **EUROPEAN PATENT SPECIFICATION**

(45) Date of publication of patent specification: **17.11.88**

(51) Int. Cl.$^4$: **C 08 F 6/04**

(21) Application number: **84401929.9**

(22) Date of filing: **27.09.84**

(54) **Process for removal of low molecular weight fractions from vinyl pyridine polymers and copolymers.**

(43) Date of publication of application:
**09.04.86 Bulletin 86/15**

(45) Publication of the grant of the patent:
**17.11.88 Bulletin 88/46**

(84) Designated Contracting States:
**DE FR GB NL**

(58) References cited:
**EP-A-0 020 279**

(73) Proprietor: **EASTMAN KODAK COMPANY**
**343 State Street**
**Rochester New York 14650 (US)**

(72) Inventor: **Dombroski, John Richard**
**2608 Brighton Court**
**Kingsport Tennessee 37660 (US)**
Inventor: **Hawkins, James Maynard**
**2104 East Sevier Avenue**
**Kingsport Tennessee 37664 (US)**

(74) Representative: **Parent, Yves et al**
**Kodak-Pathé Département Brevets et Licences**
**Centre de Recherches et de Technologie Zone Industrielle**
**F-71102 Chalon-sur-Saône Cédex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 176 642 B1**

Courier Press, Leamington Spa, England.

## Description

Technical Field

This invention relates to a process for separating high molecular weight polymers of alkenyl pyridine compounds from mixtures thereof with monomers and oligomers.

Background of the Invention

For many end-use applications, it is desirable to process high molecular weight polymers having low residual monomer concentrations and low levels of oligomers. The conventional methods used for removal of unpolymerized monomer from polymer dispersions, latexes, or suspensions generally depend on steam distillation, degasification, or vacuum stripping processes. Examples of these conventional methods are described in literature references such as: (a) *Ger. Offen.* 2,635,478; (b) Fr. Demande 2,302,306; (c) B.P. 1468490; and (d) Chem. Eng. Prog., Aug., 1981, pp 55—59. Although these methods are generally effective for removal of volatile monomers, they are generally ineffective for removal of the nonvolatile low molecular weight components from the polymer. The present invention is concerned with a method for the concurrent removal of residual monomer and low molecular weight components from vinyl pyridine polymers and copolymers.

The increased desirability and use of polymers for pharmaceutical, biomedical, and agricultural applications has resulted in the need for efficient and satisfactory methods for removing low molecular weight fractions and unpolymerized monomers from the polymer mass. Polymers that have been adequately separated from residual monomers and low molecular weight components are expected to provide greater product uniformity, more consistent physical and chemical properties, and improved storage and shelf-life capability. This invention demonstrates a novel process for the simultaneous removal of residual monomers and low molecular weight components from a vinyl pyridine polymer or copolymer by continuous extraction using dilute aqueous acids.

Disclosure of Invention

According to the present invention, there is provided a process for separating high molecular weight polymers and copolymers of alkenyl pyridine compounds from mixtures thereof with monomers and low molecular weight fractions of the compounds comprising dispersing the mixture in a solution of an acid at a temperature of between 50°C and 70°C, to thereby dissolve the monomers and low molecular weight fractions while maintaining the high molecular weight polymers as a solid. Subsequently, the solid high molecular weight polymer is separated from the solution of monomers and low molecular weight fractions in aqueous acid.

The alkenyl pyridine compounds which may be used in accordance with this invention have a pKa of about 2—10 and have the general formula

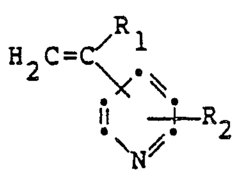

wherein $R_1$ is hydrogen or alkyl having 1—4 carbon atoms, and $R_2$ is hydrogen, alkyl having 1—4 carbon atoms, cycloalkyl having up to 8 carbon atoms, phenyl or alkyl substituted phenyl having up to 12 carbon atoms, or a halogen.

The polymer and copolymers of alkenyl pyridine compounds contain at least 50 weight % of polymer units derived from at least one monomer having the structure shown above. The polymer, however, may contain up to 50 weight percent of comonomer derived from other copolymerizable monomers such as, for example, styrene, vinyl acetate or methyl methacrylate.

Polymers made by emulsion polymerization techniques normally contain small amounts of monomer and low molecular weight polymers. Normally, these monomers and low molecular weight polymers account for less than about 3% of the total weight of polymers and monomers.

In practicing the process, a mixture of the monomer and polymer (high and low molecular weight) is first dispersed in an aqueous solution of an acid at a temperature between about 50°C and 70°C, preferably 55—65°C. The concentration is adjusted such that the solids content (monomer and polymer) is between 10% and 50% by weight. The monomer and low molecular weight polymer dissolves in this acid solution, leaving the higher molecular weight polymers as the only solid. This solid polymer is easily separated from the solution by conventional techniques well known to those skilled in the art, such as for example, by filtering.

The acids useful for the purpose of this invention include both organic acids and inorganic acids. Acids suitable are those with pKa values between −10 and 6. The preferred acids have pKa values between −3 and 5. Suitable acids include the following:

| Acid | pKa at 25°C |
|---|---|
| Hydrobromic acid | −9 |
| Sulfuric acid | −3 |
| Nitric acid | −1.64 |
| Pyrophosphoric acid | 1.0 |
| Ortho-phosphorous acid | 1.8 |
| Ortho-phosphoric acid | 2.1 |
| Chloroacetic acid | 2.87 |
| Formic acid | 3.75 |
| Acetic acid | 4.75 |
| Butyric acid | 4.82 |

The pKa is most frequently used to express the extent of dissociation, or the strength of acids, and bases. pKa is defined as:

$$pKa = -\log_{10} Ka$$

where Ka is the thermodynamic equilibrium acidity constant. Clearly, the stronger the acid, the smaller the value of pKa; conversely, for bases, the larger the pKa, the stronger is the base. Unless otherwise specified, pKa as used herein is determined at 25°C.

Typically, high molecular weight copolymers of pyridinium vinyl monomers and selected vinyl comonomers are prepared either by batch or continuous emulsion polymerization at 65°C using a water soluble free radical initiator such as potassium persulfate. The polymer is coagulated by addition of saturated sodium chloride solution, heated to 70°C, and collected by filtration. The polymer is redispersed in a fresh portion of water, heated to 70°C, and again filtered. This process is repeated two additional times. The polymer filter cake is then transferred to an extraction vessel and extracted with 1% aqueous acid while maintaining the extraction temperature at 50—60°C. The polymer mass may be maintained in a fixed-bed and extracted or, more desirably, be dispersed as a fluid-bed and continuously extracted. Analysis of the polymer before and after extraction shows a remarkable reduction in the concentration of residual, unpolymerized momomer, and also the low molecular weight fraction of the polymer. Recovery of purified, high molecular weight polymer from the extraction equipment at the conclusion of the purification step is about 97%.

The following examples are submitted for a better understanding of the invention.

Example 1

This example demonstrates the effect of extraction time on the removal of residual vinyl monomer and low molecular weight fractions from a high molecular weight copolymer of 5-vinyl-2-picoline. The extraction is performed using a fixed-bed continuous extractor charged with 1% aqueous acetic acid. The extraction temperature is maintained at 60—65°C.

| Extraction Time (h.) | Low Mol. Wt. Fraction,* ppm[1] | Residual Monomers: Styrene, ppb[2] | Residual Monomers: 5-Vinyl-2-picoline, ppb[2] |
|---|---|---|---|
| 0 (starting material) | 2,700 | 503 | 1,030 |
| 1.5 | 690 | 96 | 197 |
| 3 | 836 | 92 | 202 |
| 6 | 641 | 99 | 122 |
| 12 | 759 | 87 | 213 |
| 24 | 554 | 78 | 102 |

*Having mol. wt. ≤2,000 g/mol
1 - Parts per million
2 - Parts per billion

Example 2

This example illustrates the important effect of extraction temperature on the efficient removal of residual, unpolymerized monomers, and low molecular weight products from a high molecular weight copolymer of 5-vinyl-2-picoline. The continuous extraction is performed using a fixed-fed extractor for 24 hrs using 1% aqueous acetic acid at the selected temperatures shown below.

| Extraction Temperature, (°C.) | Low Mol. Wt. Fraction,* ppm | Residual Monomers | |
|---|---|---|---|
| | | Styrene, ppb | 5-Vinyl-2-picoline, ppb |
| - (starting material) | 4,000 | >50,000 | >200,000 |
| 25°C. | 1,500 | <100 | 379 |
| 50°C. | 690 | <100 | 370 |
| 50°-60°C. | 443 | <100 | 338 |
| 70°-80°C. | 438 | 133 | 476 |

*Mol. wt. ≤2,000 g/mole

Example 3

This example shows the effect of extractant volume on the removal of residual monomer and low molecular weight components from a high molecular weight polymer of 5-vinyl-2-picoline. One-hundred grams of the polymer is placed in a fluid-bed extraction vessel. The polymer is extracted with 1.25% aqueous acetic acid at 70°—80°C by continuous counter-current washing. The following data show the rapid removal of residual monomer and low molecular weight components from the polymer as a function of extraction volume.

| Extraction Volume (mL) | Low Mol. Wt. Fraction,* ppm | Residual Monomers 5-Vinyl-2-picoline, ppb |
|---|---|---|
| 0 (starting material) | 1,200 | 4,000 |
| 1500 | 427 | 96 |
| 3000 | 424 | 56 |
| 4500 | 375 | 63 |
| 6000 | 185 | <50 |
| 7200 | 57 | 73 |

*Mol. wt. ≤2,000 g/mole

Example 4

The extraction process described in Example 3 is repeated using another polymer sample having different starting levels of low molecular weight components and residual monomer. The following data show the effect of extractant volume on removal of residual monomer and low molecular weight fraction from the polymer.

| Extraction Volume (mL) | Low Mol. Wt. Fraction,* ppm | Residual Monomers 5-Vinyl-2-picoline ppb |
|---|---|---|
| 0 (starting material) | 1,000 | 2,790 |
| 1500 | 386 | 160 |
| 3000 | 620 | 105 |
| 4500 | 618 | 66 |
| 6000 | 69 | <83 |
| 7200 | 186 | 80 |

*Mol. wt. ≤2,000 g/mole

Example 5

This example demonstrates the utility of using dilute aqueous sulfuric acid as an extractant for removal of residual monomer and low molecular weight fraction from a copolymer of 5-vinyl-2-picoline (5V2P) and styrene (ST). One-hundred grams of the copolymer is extracted using the fluid-bed continuous extractor. The extractant is 0.01% sulfuric acid at 70°—80°C. The extractant feed pump rate is maintained at 21 mL/min.

| Extraction Volume (mL) | Low Mol. Wt. Fraction,* ppm | Residual Monomers | |
|---|---|---|---|
| | | Styrene, ppb | 5-Vinyl-2-picoline, ppb |
| 0 (starting material) | 1,700 | 319 | 10,900 |
| 1500 | 1,300 | 54 | 1,000 |
| 3000 | 372 | 50 | 332 |
| 4500 | 523 | <50 | 303 |
| 7200 | 280 | <50 | 89 |

*Mol. wt. ≤2,000 g/mole

Example 6

This example compares the effect of extraction of the vinyl pyridine copolymer using 0.01% sulfuric acid and also with an equal volume of distilled water. The polymer is extracted using the same equipment and procedure described in Example Nos. 3 and 5. The following results show that extraction of the polymer with distilled water is useful for reducing the residual monomer level, but is not effective for removing the low mol. wt. fractions from the polymer.

| Extraction Volume (mL) | Low Mol. Wt. Fraction,* ppm | Residual Monomers | |
|---|---|---|---|
| | | Styrene, ppb | 5-Vinyl-2-picoline, ppb |
| Starting Material | 1,700 | 319 | 10,900 |
| 7200 mL Distilled Water | 1,300 | <50 | 413 |
| 7200 mL 0.01% $H_2SO_4$ | 280 | <50 | 89 |

*Mol. wt. ≤2,000 g/mole

Unless otherwise specified, all parts, percentages, ratios, etc., are by weight, and molecular weight is on a weight average basis.

## Claims

1. Process for separating high molecular weight polymers of alkenyl pyridine compounds having a pKa of 2—10 and of the formula

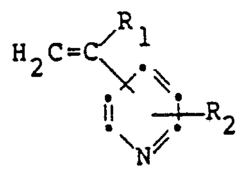

wherein $R_1$ is hydrogen or alkyl having 1—4 carbon atoms, and $R_2$ is hydrogen, alkyl having 1—4 carbon atoms, cycloalkyl having up to 8 carbon atoms, phenyl or alkyl substituted phenyl having up to 12 carbon atoms, or halogen,
from mixtures thereof with monomers and low molecular weight fractions of said compounds characterized in that said mixture is dispersed in a solution of an acid having a pKa of between −10 and 6 at a concentration of between 10% and 50% solids and at a temperature of between 50°C and 70°C, to thereby dissolve said monomers and low molecular weight fractions while maintaining said high molecular weight polymers as a solid, and subsequently said solid high molecular weight polymer is separated from the solution of monomers and low molecular weight fractions in aqueous acid.

2. Process according to Claim 1 wherein said compounds are dispersed in said solution of an acid at a temperature of 55—65°C.

3. Process according to Claim 1 wherein said acids have a pKa of −3 and 5.

4. Process according to Claim 1 wherein said alkenyl pyridine compound is a polymer or copolymer of vinyl pyridine.

5. Process for separating high molecular weight polymers or copolymers of vinyl pyridine from mixtures thereof with monomers and low molecular weight fractions thereof characterized in that said mixture is dispersed in a solution of an acid having a pKa of between −3 and 5 at a concentration of between 10% and 50% solids and at a temperature of between about 55°C and 65°C, to thereby dissolve said monomers and low molecular weight fractions while maintaining said high molecular weight polymers as a solid, and subsequently said solid high molecular weight polymer is separated from the solution of monomers and low molecular weight fractions in aqueous acid.

## Patentansprüche

1. Verfahren zur Abtrennung von hochmolekulargewichtigen Polymeren von Alkenylpyridinverbindungen mit einem pKa-Wert von 2—10 und der Formel

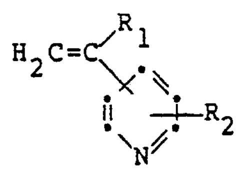

in der $R_1$ für Wasserstoff oder Alkyl mit 1—4 Kohlenstoffatomen und $R_2$ für Wasserstoff, Alkyl mit 1—4 Kohlenstoffatomen, Cycloalkyl mit bis zu 8 Kohlenstoffatomen, Phenyl oder Alkyl-substituiertes Phenyl mit bis zu 12 Kohlenstoffatomen oder Halogen stehen,
von Mischungen der Polymeren mit Monomeren und niedrigmolekulargewichtigen Fraktionen der Verbindungen, dadurch gekennzeichnet, daß die Mischung in einer Lösung einer Säure mit einem pKa-Wert zwischen −10 und 6 bei einer Konzentration zwischen 10% und 50% Feststoffen und bei einer Temperatur zwischen 50°C und 70°C dispergiert wird, wobei die Monomeren und niedrigmolekulargewichtigen Fraktionen gelöst werden, während die hochmolekulargewichtigen Polymeren als Feststoffe zurückbleiben, und daß man daraufhin die festen hochmolekulargewichtigen Polymeren von der Lösung der Monomeren und niedrigmolekulargewichtigen Fraktionen in der wäßrigen Säure abtrennt.

2. Verfahren nach Anspruch 1, bei dem man die Verbindungen in der Lösung einer Säure bei einer Temperatur von 55—65°C dispergiert.

3. Verfahren nach Anspruch 1, bei dem die Säuren einen pKa-Wert von −3 bis 5 haben.

4. Verfahren nach Anspruch 1, in dem die Alkenylpyridinverbindung ein Polymer oder Copolymer des Vinylpyridins ist.

5. Verfahren zur Abtrennung von hochmolekulargewichtigen Polymeren oder Copolymeren des Vinylpyridins von Mischungen desselben mit Monomeren und niedrigmolekulargewichtigen Fraktionen hiervon, dadurch gekennzeichnet, daß die Mischung in einer Lösung einer Säure mit einem pKa-Wert zwischen −3 und 5 bei einer Konzentration zwischen 10% und 50% Feststoffen und bei einer Temperatur

zwischen etwa 55°C und 65°C dispergiert wird, wobei die Monomeren und niedrigmolekulargewichtigen Fraktionen gelöst werden, während die hochmolekulargewichtigen Polymeren als Feststoffe zurückbleiben, und daß man daraufhin die festen hochmolekulargewichtigen Polymeren von der Lösung der Monomeren und niedrigmolekulargewichtigen Fraktionen in der wäßrigen Säure abtrennt.

**Revendications**

1. Procédé pour séparer les polymères à poids moléculaire élevé d'alkénylpyridine ayant un pKa compris entre 2 et 10 et la formule suivante:

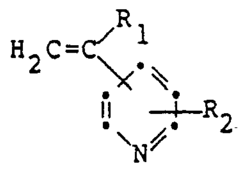

dans laquelle

$R_1$ est un atome d'hydrogène, ou un groupe alkyle de 1 à 4 atomes de carbone et $R_2$ est un atome d'hydrogène, un groupe alkyle de 1 à 4 atomes de carbone, un groupe cycloalkyle ayant jusqu'à 8 atomes de carbone, phényle ou alkylphényle ayant jusqu'à 12 atomes de carbone ou bien un atome d'halogène, de mélanges contenant ces polymères à poids moléculaire élevé, les monomères et les fractions à bas poids moléculaire desdits polymères, caractérisé en ce que l'on disperse ledit mélange dans une solution d'un acide ayant un pKa compris entre −10 et 6, la concentration de solide étant comprise entre 10% et 50% et la température comprise entre 50°C et 70°C, afin de dissoudre lesdits monomères et lesdites fractions à bas poids moléculaire, tout en maintenant sous forme solide les polymères à poids moléculaire élevé, et l'on sépare ensuite les polymères à poids moléculaire élevé sous forme solide de la solution contenant les monomères et les fractions à bas poids moléculaire dans l'acide aqueux.

2. Procédé selon la revendication 1, dans lequel on disperse ledit mélange dans ladite solution d'acide à une température comprise entre 55 et 65°C.

3. Procédé selon la revendication 1 dans lequel ledit acide a un pKa compris entre −3 et 5.

4. Procédé selon la revendication 1 dans lequel ledit polymère d'alkénylpyridine est un polymère ou copolymère de vinylpyridine.

5. Procédé pour séparer des polymères ou copolymères de vinylpyridine à poids moléculaire élevé de mélanges contenant ces polymères ou copolymères, les monomères et les fractions à bas poids moléculaire de ces polymères ou copolymères, caractérisé en ce que l'on disperse ledit mélange dans une solution d'un acide ayant un pKa compris entre −3 et 5, la concentration de solide étant comprise entre 10% et 50% et la température étant comprise entre 55°C et 65°C, afin de dissoudre lesdits monomères et lesdites fractions à bas poids moléculaire, tout en maintenant sous forme solide les polymères ou copolymères à poids moléculaire élevé, et l'on sépare ensuite les polymères ou copolymères à poids moléculaire élevé sous forme solide de la solution contenant les monomères et les fractions à bas poids moléculaire dans l'acide aqueux.